Europäisches Patentamt

European Patent Office

Office européen des brevets

(19)

(11) Publication number: **0 145 453**
**A2**

(12) **EUROPEAN PATENT APPLICATION**

(21) Application number: **84308475.7**

(22) Date of filing: **06.12.84**

(51) Int. Cl.⁴: **A 23 L 1/216**

(30) Priority: **09.12.83 GB 8332863**

(43) Date of publication of application: **19.06.85**
**Bulletin 85/25**

(84) Designated Contracting States: **AT BE CH DE FR GB IT LI LU NL SE**

(71) Applicant: **WITCH CHIPS LTD., Bar Lane, Boroughbridge York, Y05 9LS (GB)**

(72) Inventor: **Stockdale, John William, 85 Clotherholme Road, Ripon North Yorkshire (GB)**

(74) Representative: **Virr, Dennis Austin et al, URQUHART-DYKES & LORD New Exchange Buildings Queen's Square, Middlesbrough, TS2 1AB (GB)**

(54) **Potato product and process.**

(57) A novel potato product is produced by separating the peel from potatoes, homogenising the separated peel, optionally after reducing its water content, forming the resulting homogenised peel into a thin layer and fixing the peel in that form. The product may if desired be formed into potato shapes and then filled with potato.

EP 0 145 453 A2

## POTATO PRODUCT AND PROCESS

The present invention is a novel potato product and a process for making such a product.

In the manufacture of most existing potato products, the skin is removed from the potatoes at some stage, either by scrubbing the uncooked potatoes or by steam-cooking the potatoes and separating the skin during or subsequent to the cooking operation. Whichever method is employed, a substantial quantity of wet peel arises, which heretofore has been discarded as waste.

When baked potatoes are supplied to retail outlets, the skin is left inplace and, either before or after delivery, the baked potato is cut and incompletely divided, a filling of desired flavour being introduced into the open cut. Thus the eventual customer buys a filled baked potato in which the flavoured filling is confined to the middle of the potato.

We have now devised a potato product by means of which the usual wastage of peel may be avoided and which also makes possible the provision of a filled baked potato in which the flavoured filling is distributed throughout the potato. Our novel potato product is a reconstituted potato peel formed by separating the peel from a quantity of potatoes, homogenising the separated peel, forming the resulting homogenised peel into a thin layer and fixing the peel in this form.

The reconstituted potato peel according to our invention may be made by first of all separating from the original potatoes a quantity of wet peel, if desired then separating residual potato from the wet peel, thereafter reducing the water content of the peel, homogenising the peel, forming the resulting homogenised peel into a thin layer and fixing the peel in this form. The resulting reconstituted potato peel is then suitable as the outer skin of a reconstituted potato which closely resembles a conventional potato in both appearance and cooking characteristics.

The initial separation of wet peel from the original potatoes may readily be achieved in conventional manner using conventional equipment. Since the object is to obtain a wet peel having as little potato as possible associated with it, it may be desired to achieve a higher degree of separation at the initial stage or alternatively to submit the wet peel first obtained to a further separation step to remove residual potato still adhering to it.

Having detached the peel from the potato itself, the two products may be separated by simple screening. For example, screening carried out on a screen of which the mesh size is of the order of 2 millimetres may very effectively result in retention of the wet peel, while the potato granules pass through the mesh.

The wet peel so obtained is now subjected to a step in which its water content is reduced. Thus for example the peel may be passed on to an open-mesh conveyor, upon which it is allowed to drain until a desired reduced water content is achieved.

The resulting peel is now subjected to homogenisation. This operation may conveniently be carried out in conventional mixing apparatus and may advantageously be conducted on a continuous basis. Thus the whole treatment from initial potato peeling to homogenisation may be carried out continuously.

The homogenised paste of peel material is next formed into a thin layer. The layer may be a continuous flat sheet or alternatively it may be formed into a potato shell against the inside, and/or upon the outside, of a potato-shaped mould. If it is desired to produce a flat sheet, this may conveniently be formed by rolling.

Such a flat sheet of reconstituted peel may itself form the basis of a novel potato product, for example a flat potato product based upon a layer, or sandwiched between layers, of reconstituted peel. However, if it is desired to produce a natural-looking reconstituted potato, then the flat sheet may be moulded, if desired in a continuous operation, into a large number of potato shells, which conveniently may each correspond to half a potato.

The peel must now be fixed in this thin-layer state. This fixing may be achieved by simple drying but considerably better results may be obtained by forming a fixing material, for example calcium alginate, in situ in the layer. Thus a soluble alginate, for example sodium alginate, may be incorporated in the peel after homogenisation of the latter and, when the thin layer of homogenised peel has been formed, the sodium alginate therein may be reacted with a solution of a calcium salt, for example calcium chloride.

The reconstituted potato peel according to our invention, preferably having been shaped into the form of a potato shell, may now be filled with potato. The potato has preferably been

0145453

- 4 -

mixed with a suitable material to impart a flavour to the mixture. For example, a sauce, puree or powder or a material such as tomato or cheese may be incorporated in the potato mixture. The potato and/or the other material may have been cooked or pre-cooked before mixing. In a preferred form of our invention the potato is fully cooked before inclusion in the potato shell and the resulting product is then frozen. It may then be heated in a normal or microwave oven, either in the home or at the immediate point of sale in a fast-food establishment.

A specific example of the production of a reconstituted potato skin according to my invention, and of its conversion into a further potato product, is given hereinafter. Percentages where given are by weight.

Example

The peel waste product of a conventional commercial potato peeling operation, which normally would have been discarded, is used as the starting material. Extra water has been supplied to the peeling operation and the product is therefore obtained as an aqueous suspension of potato granules and peel.

The suspension is fed continuously to a 2 mm. parabolic screen, which retains the peel and allows the potato granules and most of the water to pass through. The potato granules are further screened to remove "eyes" and other defects and the screened suspension passed to a settlement tank and allowed to stand. On settling, the lower layer which separates is a pasty solution of potato granules. The latter, after decanting off of the water, is vacuum-filtered and drum dried to form a potato flake.

The wet peel derived from the first screen is carried, on an open-mesh conveyor on which it is allowed to drip dry, to a homogeniser in which it is converted to the form of a uniform, pasty material. A small quantity of tetrasodium pyrophosphate (approximately half a gram per 100 grams of peel) is incorporated in the peel during homogenisation.

The homogenised material is blended with a solution of an alginate salt (for example a 6 per cent solution of Manucol DM in water), in the proportion of approximately 3.5 parts of peel per one part of solution, in order to produce a paste-like product, which is the precursor of our final reconstituted peel. This paste-like product is then shaped in one of two ways.

A first sample of the paste-like material was formed into a thin flat layer by rolling between two sheets of polythene. The layer was then fluid fixed with a 5 per cent solution of calcium chloride. Before it was fully set, the layer was shaped in a series of moulds into a number of half-potato shells.

A second sample of the paste-like material was injected into a mould containing a small quantity of calcium chloride 5 per cent solution and the sample was shaped by a secondary mould into a half-potato shell of peel.

Shells formed by the above two methods were filled with a mixture of baked-potato mash and cheese and were then frozen. Some of the frozen reconstituted potato halves were subsequently heated in a microwave oven and others in a conventional gas oven. In each case, the shells retained their structure throughout the freezing and subsequent cooking.

While it was not necessary in the above Example, it is possible to restore or enhance the colour of the peel shells by coating them with a solution containing 2 per cent of caramel colouring and 10 per cent of dextrose.

## CLAIMS

1. A process for producing a potato product comprising separating the peel from a quantity of potatoes, homogenising the separated peel, forming the resulting homogenised peel into a thin layer and fixing the peel in this form.

2. A process according to claim 1, wherein the peel is separated from the potatoes by wet scrubbing or during or subsequent to a steam-cooking step.

3. A process according to claim 1 or claim 2, wherein the separation of the peel from the potatoes is assisted by screening.

4. A process according to any of the preceding claims, wherein the water content of the separated peel is reduced before the peel is homogenised.

5. A process according to claim 4, wherein the water content of the separated peel is reduced upon an open-mesh conveyor.

6. A process according to any of the preceding claims, wherein the homogenisation is carried out in a mixer.

7. A process according to any of the preceding claims, wherein the homogenised peel is formed into a flat sheet by rolling.

8. A process according to claim 7, wherein the flat sheet is subsequently formed into a shell resembling a potato or part-potato.

9. A process according to any of claims 1 to 6, wherein the homogenised peel is formed into a shell resembling a potato or part-potato.

10. A process according to any of the preceding claims, wherein the formed thin layer of peel is fixed by drying.

11. A process according to any of the preceding claims wherein the fixing of the thin layer of peel is effected or assisted using a fixing agent.

12. A process according to claim 11, wherein the fixing agent is calcium alginate.

13. A process according to any of the preceding claims, wherein the fixed peel is subsequently filled with potato.

14. A potato product produced by the process of any of the preceding claims.